Europäisches Patentamt

European Patent Office

Office européen des brevets

(19)

(11) **EP 1 587 208 A1**

(12) **EUROPEAN PATENT APPLICATION**

(43) Date of publication:
**19.10.2005 Bulletin 2005/42**

(51) Int Cl.$^7$: **H02M 3/156**

(21) Application number: **04008878.3**

(22) Date of filing: **14.04.2004**

| | |
|---|---|
| (84) Designated Contracting States:<br>**AT BE BG CH CY CZ DE DK EE ES FI FR GB GR HU IE IT LI LU MC NL PL PT RO SE SI SK TR**<br>Designated Extension States:<br>**AL HR LT LV MK**<br><br>(71) Applicant: **Infineon Technologies AG**<br>**81669 München (DE)**<br><br>(72) Inventors:<br>• **Pittassi, Riccardo**<br>**34135 Trieste (IT)** | • **Bernacchia, Guiseppe**<br>**35129 Padova (IT)**<br><br>(74) Representative: **Bickel, Michael**<br>**Westphal - Mussgnug & Partner**<br>**Patentanwälte**<br>**Mozartstrasse 8**<br>**80336 München (DE)** |

(54) **Buck converter with low loss current measurement**

(57)     The present invention refers to a buck converter for converting an input voltage (Vcc) to an output voltage (Vout) at an output, where the buck converter comprises the following features; at least one inductive storage element (L) having a first connection being connected to the output terminal (OUT) and a second connection being connected during activation periods (Ton) to a supply potential (Vcc) and during deactivation periods to a reference potential (GND) depending on a drive signal (S1); a drive circuit (10) for providing the drive signal (S1) to which a control signal (Sea) that varies with the output voltage (Vout) and a load current signal (S26) dependent on a load current through the inductive storage element are fed; a signal generation circuit (20, 26, 40) for producing a load current signal, wherein the signal generation circuit comprises the following features; a ramp signal generation circuit (20), which generates a ramp signal (Sr) with a slope that varies with the input voltage (Vcc) and output voltage (Vout); a DC signal generation circuit (40) connected to the inductive storage element (L) that generates a DC signal (S0) that varies with the direct component (I0) of the load current (IL); a logic circuit (26), to which the ramp signal (Sr) and the DC signal (S0) are fed, for producing the load current signal (S26).

FIG 1

EP 1 587 208 A1

## Description

The method refers to a buck converter with low loss current measurement.

Buck converters are switching converters used to convert an input voltage into an output voltage that is lower than the input voltage. The basic design of such buck converters is described on page 176 of Stengl, J. P.; Tihanyi, J.: "Leistungs-MOS-FET-Praxis" (Practical Application of MOS-FETs), 2nd edition, Pflaum Verlag, Munich, for example. The key element of a buck converter is an inductive storage element that is driven in accordance with a pulse width-modulated drive signal, and connected during activation periods to a supply potential and during deactivation periods to a reference potential.

To regulate the output voltage to maintain an approximately constant value independent of the input current of a load connected to output terminals, a control system for measuring the output voltage or changes in the output voltage is provided in switching converters of this kind. If the output voltage deviates from a specified reference value, the power input of the buck converter is changed by altering the activation period to set the output voltage to the reference value again. In the case of buck converters working with so-called current mode control, the time behavior of the current through the inductor is used for generating the pulse width-modulated drive signal. The time behavior, which corresponds approximately to a delta signal characteristic, is compared with a control signal dependent on the output voltage in order to define the beginning or end of an activation period. The beginning or end of the activation period is defined with a fixed clocking pattern.

A buck converter with current mode control is described on pages 492 - 495 of Tarter, R. E.:"Solid-State Power Conversion Handbook", Wiley & Sons, New York, 1993, ISBN 0-471-57243-8, for example.

The measurement of the current through the inductor is often the cause of problems in current mode buck converters.

A buck converter for alternate connection of the inductor to the supply and reference potentials is described in US 6,166,528. The converter has a half-bridge circuit with two transistors: the first transistor is connected between the inductor and the supply potential, while the second transistor is connected between the inducator and the reference potential. A current measuring system measures the current flowing through the second transistor in order to provide a current measuring signal. The first transistor is switched on any time the current through the second transistor falls below the value of a control signal that varies with the output voltage, and switched off periodically according to a clock signal. This buck converter is operated in the so-called valley current mode because the times at which the current through the inductor reaches a local minimum value are the principal factors for switching on the first transistor or for the beginning of an activation period.

The object of the present invention is to provide a buck converter with a current measuring system to measure the current through the inductor.

The object is achieved by a buck converter operating according to the features of claim 1. Preffered embodiments are the subject of the subclaims.

The buck converter for converting an input voltage into an output voltage available at an output includes at least one inductive storage element with one connection connected to the output terminal and a second connection connected during activation periods to a supply potential and during deactivation periods to a reference potential in accordance with a drive signal. The buck converter also includes a drive circuit for providing the drive signal and a signal generation circuit for producing a load current signal. A control signal that varies with the output voltage and a load current signal dependent on the current through the inductive storage element are fed to the drive circuit in the buck converter. The signal generation circuit contains a ramp signal generation circuit for providing a ramp signal with a ramp that varies with the input and output voltages, as well as a DC signal generation circuit that is connected to the inductive storage element for producing a DC signal that varies with the direct component of a load current through the coil, and a logic circuit, to which the ramp signal and the DC signal are fed, for producing the load current signal.

The method makes use of the fact that the current through the inductor of a buck converter is approximately proportional to the input and output voltages, and in particular, proportional to the difference between the input voltage and the lower output voltage. The ramp signal generation circuit uses this relationship to generate a ramp signal without having to measure the current through the inductor. For buck converters operating in delta current mode - i.e., in which the inductance does not fully decline in commutation before beginning a new activation period, the current through the inductor exhibits a direct component that cannot be immediately determined using the input and output voltages. The DC signal generation circuit produces a signal that reproduces the direct component of the current through the inductor in order to provide a load current signal at the output of the logic circuit that is at least approximately proportional to the load current through the inductor.

The ramp signal generation circuit in one embodiment has a voltage-controlled current source that produces a current that varies according to the difference between the input voltage and the output voltage, and a capacitive storage element that is connected to the current source and which provides the ramp signal.

The DC signal generation circuit in one embodiment has a sample-and-hold element connected to the second connection of the inductive storage element. The sample-and-hold element samples the potential applied to the second connection in synchronization with the clock of the drive signal in order to provide the DC signal. The sample-and-hold element is designed, for example, to sample the potential at the beginning of an activation period.

To measure the potential at the second connection of the inductive storage element, the sample-and-hold element in one embodiment measures the voltage over a freerunning element of the buck converter that is connected between the second connection and the reference potential.

In a different embodiment, the DC signal generation circuit has a low-pass filter, which is connected in parallel to the inductive storage element and at which the DC signal is provided. A sample-and-hold element can be optionally connected after the low-pass filter to provide the DC signal.

The method presented here is explained in greater detail below using examples illustrated in figures.

Figure 1    shows a first embodiment of a buck converter having a signal generation circuit for producing a load current signal.

Figure 2    shows a second embodiment of a buck converter having a signal generation circuit for producing a load current signal.

Figure 3    shows a third embodiment of a buck converter having a signal generation circuit for producing a load current signal.

Figure 4    shows examples of the time behavior of selected signals occurring in the buck converters illustrated in Figures 1 through 3.

Unless otherwise stated, the reference signs in the figures indicate the same parts, circuit components and signals with the same meaning.

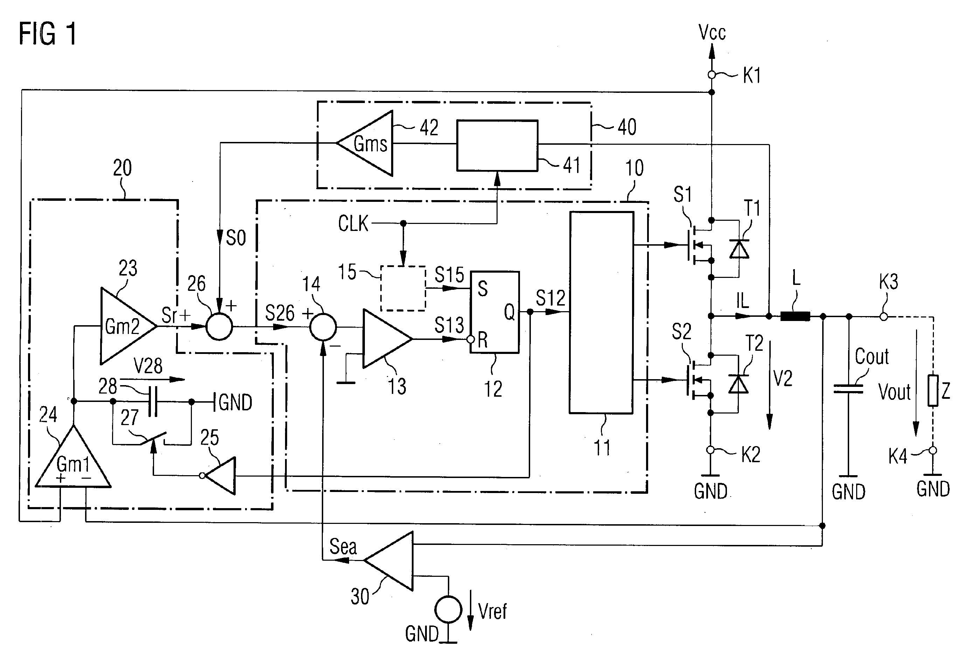

Figure 1 depicts a first embodiment of a buck converter designed according to the presented method. The converter is used to convert an input voltage Vcc between input terminals K1, K2 to an output voltage Vout between output terminals K3, K4. Both the input voltage Vcc and the output voltage Vout refer to a reference potential GND, to which one of the input terminals K2 and one of the output terminals K4 are connected. The converter part of the buck converter connected between the input terminals K1, K2 and the output terminals K3, K4 has a conventional structure and includes an inductive storage element L with one connection connected to the output terminal K3, and the other connection connected optionally to either the first terminal K1 connected to the input voltage Vcc or to the second terminal K2 connected to the reference potential GND. To drive the inductive storage element L, the buck converter has a half-bridge circuit with two switches in the form of transistors T1, T2, whose load paths are connected in series between the input terminals K1, K2 and that have a common load connection to which the second connection of the inductive storage element L is connected.

The inductive storage element L absorbs energy from the input voltage Vcc when the first transistor T1 is conducting, and conveys the energy to a load Z connected to the buck converter via the output terminal K3 when the first transistor T1 is disabled. A capacitor Cout connected between the output terminals K3, K4 smooths the output voltage Vout. The second transistor T2 works as a freerunning element for the load current IL flowing through the inductor L when the first transistor T1 is blocked. The first transistor T1, through which the power input of the buck converter, and therefore the output voltage Vout, are controlled, is crucial to the operation of the buck converter. The second transistor T2 can also be replaced by a free-wheeling diode in the well-known manner. A drive circuit 10 is provided to drive the first transistor T1 with a particular drive signal S1, and in this case to also drive the second transistor T2 with a complementary drive signal S2 to the first drive signal S1. This drive circuit 10 produces pulse width-modulated drive signals S1, S2 in relation to a control signal Sea and a load current signal S26 in order to drive the two transistors T1, T2.

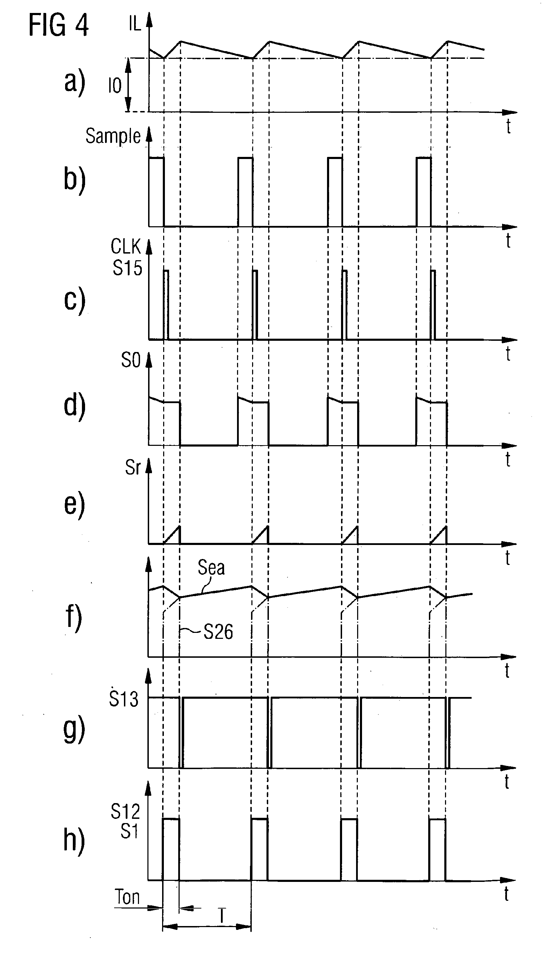

The illustrated drive circuit 10 is designed to close the first switch T1 synchronously with a clock signal CLK and to keep the switch closed for an activation period Ton which varies with the control signal Sea and the load current signal S26. The resulting load current IL obtained by driving the first switch T1 is illustrated in Figure 4a. T refers to the duration of a driving period for the first and second transistors T1, T2, while Ton represents the activation period of the first switch. The time behavior of the clock signal CLK, which defines the beginning of activation periods, is shown in Figure 4c.

The control signal Sea is generated by a control system 30, to which the output voltage Vout, on the one hand, and a reference voltage Vref on the other, are fed. The reference voltage Vref specifies a reference value for the output voltage Vout. The control system can be constructed, for example, as a proportional controller (P-controller), an integral controller (I-controller) or proporional-plus-integral controller (PI-controller). It provides the control signal Sea in relation to the difference between the output voltage Vout and the reference voltage Vref; in the case of a P-controller only the current difference between the output voltage Vout and the reference voltage Vref is considered in the control signal Sea, while for I-controllers and PI-controllers, the earlier behavior of the output voltage Vout is considered in the control signal Sea.

The load current signal S26 is produced by a signal generation circuit that includes a ramp signal generation circuit 20 and a DC signal generation circuit 40.

The ramp signal generation circuit produces a ramp signal Sr, which exhibits a rising edge during the activation periods of the first transistor T1 whose slope is proportional to the difference between the input voltage Vcc and output voltage Vout. The ramp signal generation circuit 20 has an amplifier 24, to which the input voltage Vcc and the output voltage Vout are fed, and which produces an output current 124 that is proportional to the difference between the input voltage Vcc and the output voltage Vout. The following relationship applies:

$$124=Gm1\cdot(Vcc-Vout) \qquad (1)$$

The amplifier 24 has the function of a voltage-controlled current source.

A capacitor 28 is connected between an output of the amplifier 24 and the reference potential GND. This capacitor 28 is charged by the output current of the amplifier 24 during the activation periods Ton of the first transistor T1.

The voltage V28 at the capacitor 28 during the activation period Ton is defined by the following:

$$V28= (I24\cdot t) /C= (Gm1\cdot (Vcc-Vout) \cdot t) /C \qquad (2)$$

where
C is the capacitance of the capacitor 28 and t the time that has elapsed since the beginning of the corresponding activation period of the first transistor T1. The voltage V28 at the capacitor 28 is measured by an optional second amplifier 23, at whose output the ramp signal Sr is provided. The ramp signal Sr is defined as follows:

$$Sr=Gm2\cdot V28=Gm2\cdot Gm1/C\cdot (Vcc-Vout) \cdot t \qquad (3)$$

The voltage V28 at the capacitor 28 - and therefore the ramp signal Sr - starts to rise at the beginning of an activation period from the reference potential GND each time. To achieve this, the capacitor 28 is short-circuited each time after opening the first transistor T1 by a switch 27 connected in parallel to the capacitor 28. The switch 27 is driven complementary to the first transistor T1, and is open when the first transistor T1 is conducting and closed when the first transistor T1 is disabled. A control signal S12 that has yet to be explained is provided in the drive circuit 10. This control signal S12 is converted by means of a driver circuit 11 to the first and second drive signals S1, S2 of the first and second transistors T1, T2. The time behavior of the first drive signal S1 matches the time behavior of the control signal S12; the sole purpose of the driver circuit 11 is to adjust the control signal S12 to a level suitable for driving the first transistor T1. The control signal S12 is also used with an inverter 25 to drive the switch 27 connected in parallel to the capacitor 28 in order to open the switch 27 when the first transistor T1 is conducting, and to close the switch 27 when the first transistor T1 is disabled.

Figures 4e and 4h show the time behavior of the ramp signal Sr and control signal S12 along with that of the first drive signal S1. As explained, the ramp signal Sr exhibits rising edges during activation periods Ton of the first transistor T1. Remembering equation 4, the slope of the rising edge is proportional to the difference between the input voltage Vcc and the output voltage Vout.

The following equation defines the load current IL through the inductor L when the first transistor T1 is conducting:

$$IL= (Vcc-Vout)\cdot t/L+I0 \qquad (4)$$

As can be seen in Figure 4a, the load current IL has a direct component 10 and a delta-shaped signal component. During activation periods Ton of the first transistor T1, this delta-shaped signal component has a rising edge, whose slope over the inductance value L is proportional to the difference between the input voltage Vcc and the output voltage Vout. The ramp signal Sr, which is also proportional to the same difference, at the output of the ramp signal generation circuit 20 is therefore ideal for reproducing the ramp-shaped signal characteristic of the load current IL.

To provide a DC signal S0 proportional to the direct component 10 of the load current IL, the buck converter has a DC signal generation circuit 40, which in the example contains a sample-and-hold element 41 and an optional amplifier 42 connected after the sample-and-hold element 41. The input of the sample-and-hold element 41 is connected to the second connection of the inductor L to sample the voltage V2 between the second connection and the reference potential GND when the first transistor T1 is disabled and the second transistor T2 is conducting. The voltage V2 is defined as follows when the second transistor T2 is conducting:

$$V2=IL\cdot Rdson2 \qquad (5),$$

where
Rdson2 is the on-resistance of the second transistor T2. The clock signal CLK that defines the beginning of the activation periods is fed to the sample-and-hold element 41. The sample-and-hold element 41 is designed to sample the load current value IL over the voltage V2 directly or each time the first transistor T1 is activated or shortly before that time. This is equivalent to saying that the sample-and-hold element 41 samples the minimum value of the load current IL. The sample-and-hold element 41 holds the sampled value for the activation period of the first transistor T1. To clear the sampled value upon expiry of the activation period, the control signal S12 is fed to a reset input of the sample-and-hold element 41, for which the sample-and-hold element 41 is reset with the falling edge of the control signal S12.

An output signal of the sample-and-hold element 41 corresponding to the held sampled value is amplified by the optional amplifier 42 to produce the DC signal S0. What is crucial here is that the DC signal S0 exhibits at least an approximately constant amplitude matching the sampled value during the activation period of the first transistor T1. Figure 4d shows the time behavior of the DC signal S0, which has a constant amplitude corresponding to the sampled value during the activation period Ton. The falling behavior of the signal S0 before the activation period Ton is due to the fact that the sample-and-hold element 41 used in the embodiment example already samples and holds the sampled signal for a period before the sampling time in order to hold the value already stored at the sampling time for the activation period Ton.

The DC signal S0 is proportional to the sampled local minimum values of the load current IL and is therefore proportional to the direct component 10 as shown in Figure 4a, which represents the basic pattern of the ramp-shaped signal characteristic.

The ramp signal Sr and the DC signal S0 are fed to a logic circuit 26, which is designed in the embodiment example as a signal adder and which provides a load current signal S26 corresponding to the sum of the DC signal S0 and the ramp-shaped signal Sr. For the load current signal S23 to be proportional to the load current IL, the proportionality factor between the DC signal S0 and the direct component I0 must match the proportionality factor between the ramp signal Sr and the ramp-shaped signal component of the load current IL. To ensure this relationship, the following equation must apply:

$$Rdson2 \cdot Gms = Gm1 \cdot G-2 \cdot L/C \qquad (6)$$

The drive circuit 10 that produces the first drive signal S1 from the load current signal S26 and the control signal Sea has, in the embodiment example, an RS flip-flop 12, to whose setting input the clock signal CLK is fed, and at whose noninverted output the control signal S12 is available, which is converted by means of the driver circuit 11 to the first drive signal S1. A level shifter 15 can be optionally connected before the setting input of the flip-flop 12. In this case, the clock signal CLK is fed to the level shifter 15, which adjusts the clock signal to a level suitable for setting the flip-flop 12. The clock signal CLK can be generated in the drive circuit 10, which is not treated further here, or fed in from an external clock generator.

As already explained, the clock signal CLK defines the activation times for the first transistor T1. The transistor T1 remains driven in a conducting state until the flip-flop 12 is reset and the control signal S12, and therefore the first drive signal S1, change to a low level. The flip-flop 12 is reset in accordance with the load current signal S26 and the control signal Sea: it is reset each time the load current signal S26 rises during the activation period to the value of the control signal Sea.

Figure 4f shows the time behavior of the control signal Sea when using a proportional controller 30, in addition to the time behavior of the load current signal S26. Note that Figure 4f only shows the time behavior of the load current signal S26 during the activation period Ton.

A subtractor 14, whose output is connected to a comparator 13, is included in the drive circuit 10 - as shown in Figure 1 - to provide the reset signal S13. The subtractor subtracts the control signal Sea from the load current signal S26. The subtractor's output signal 14 is fed to the comparator 13, which detects the zero crossings of the subtractor's output signal. When the first transistor T1 is turned on, these zero crossings are the times at which the load current signal S26 is greater than the control signal Sea, and therefore at which the subtractor's output signal 14 becomes greater than zero. The comparator 13 compares the subtractor's output signal 14 to zero, or to the reference potential, to set the flip-flop 12 whenever the load current signal S26 exceeds the control signal Sea.

The following principle always applies to the control of the buck converter shown in Figure 1: the output voltage Vout sinks with increasing current input of the load Z at initially constant power input; the control signal Sea rises as a consequence. This leads to prolonged activation times Ton, which results in a rise in power input of the buck converter in order to counteract further drops in the output voltage Vout and to regulate the output voltage Vout to return to the reference value.

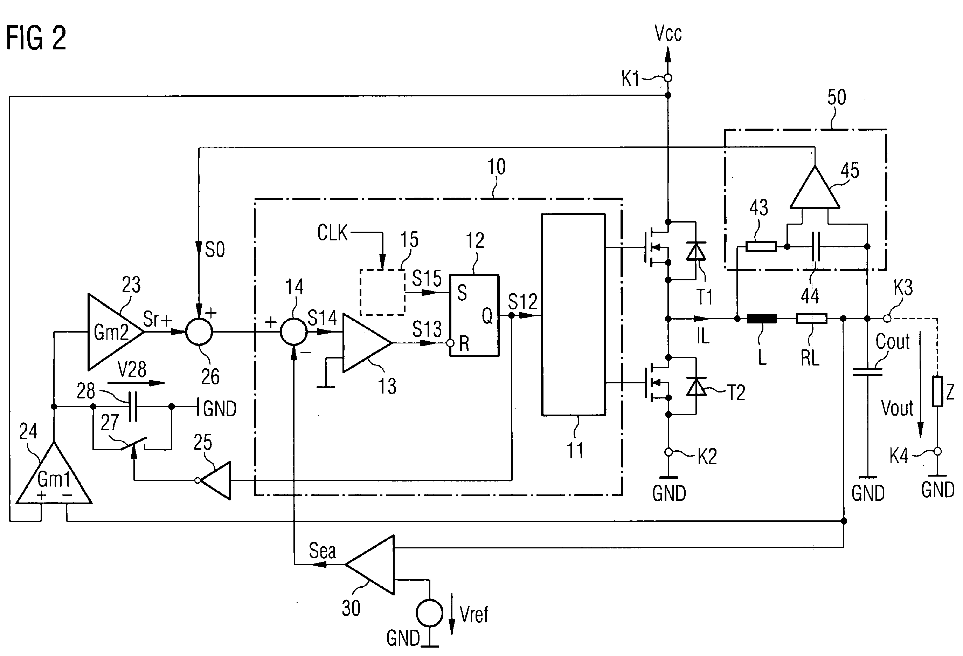

Figure 2 shows another embodiment of the buck converter for which the claim is made. In this embodiment, the DC signal S0 is provided by a DC signal generation circuit in compliance with a second embodiment that includes a low-pass filter 43, 44, which is connected in parallel to the inductive storage element L. The reference sign, RL, in Figure 2 refers to the undisputedly existing ohmic resistance of the inductive storage element L. The low-pass filter comprises in the simplest case of an RC circuit with a resistor 43 and a capacitor 44 connected in series, where the voltage at the capacitor 44 is tapped as the output signal of the low-pass filter. An optional amplifier 45 may exist to increase the voltage at the capacitor 44 and to adjust that voltage to the DC signal S0, which refers to the reference potential GND, and which is suitable for further processing. The function of the low-pass filter 43, 44 is to filter out the ramp-shaped signal component of the load current IL and to produce a DC signal S0 dependent on the direct component 10 of the load current IL. The load current IL causes a voltage drop over the parasitic resistance RL of the inductor, which is filtered by the low-pass filter 43, 44.

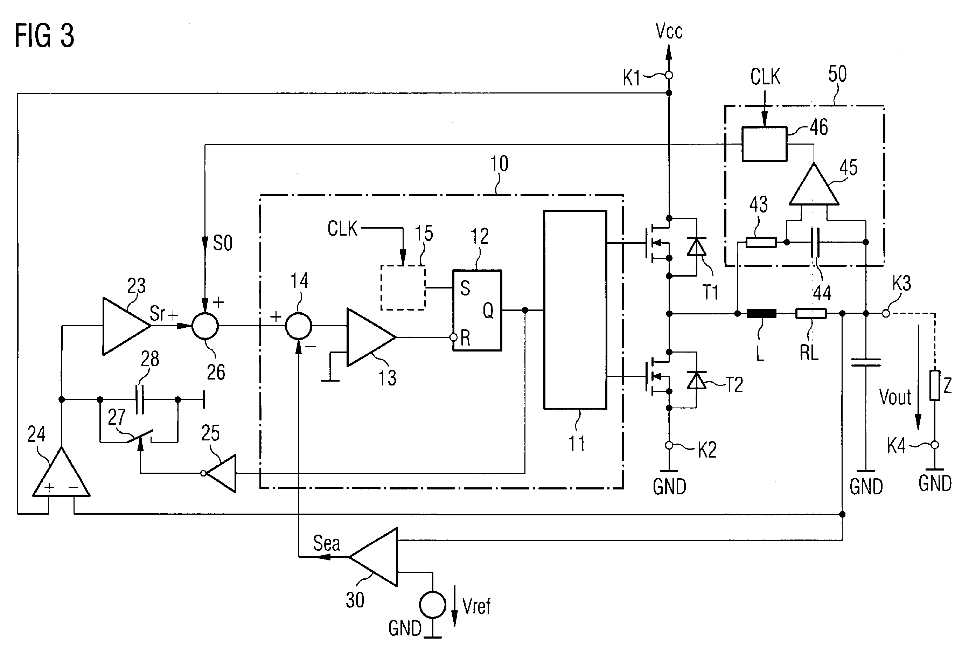

Figure 3 shows an alternative to the DC signal generation circuit in Figure 2. A sample-and-hold element 46 is connected to the output of the optional amplifier 45. This sample-and-hold element 46 samples the filter output signal synchronously to the clock signal CLK. The provision of such a sample-and-hold element 46 is particularly beneficial if the filter output signal exhibits a non-negligible ripple. The ripple of the low-pass filter output signal can be ignored if RC2 > L/RL where RC refers to the RC time constant of the RC circuit 43, 44. However, the response time of the system becomes slower if the RC time constant is significantly greater than the value obtained by dividing the inductance L by the resistance RL. The RC:(L/RL) ratio preferably ranges between 1 and 10. However ratios up to 50 are possible.

The issue is how fast the transient response should be. Of course, the longer the RC-time-constant is, the slower is the system. Since the current in the inductor is sampled at the end of the switch-off time, the current ripple (AC component) can be neglected. So, it is not necessary to have a perfect matching of the two time constant RC and L/RL. This means that if RC is close enough to L/RL the response is good anyway, no matter what the AC component is.

List of reference signs

| | |
|---|---|
| CLK | clock signal |
| Cout | output capacitor |
| K1, K2 | input terminals |
| K3, K4 | output terminals |
| L | inductive storage element (inductor) |
| RL | resistance |
| S0 | DC signal |
| S1, S2 | drive signal |
| S12 | control signal |
| S13 | reset signal |
| S15 | level shifter's output signal |
| S26 | load current signal |
| Sea | control signal |
| SR | ramp signal |
| T | drive period |
| T1, T2 | transistors, switches |
| Ton | activation period |
| V2 | voltage |
| V28 | capacitor voltage |
| Vcc | supply potential, input voltage |
| Vout | output voltage |
| Vref | reference voltage |
| Z | load |
| 10 | drive circuit |
| 11 | driver circuit |
| 12 | RS flip-flop |
| 13 | comparator |
| 14 | subtractor |
| 15 | level shifter |
| 20 | ramp signal generation circuit |
| 25 | inverter |
| 27 | switch |
| 28 | capacitor |
| 30 | controller |
| 40 | DC signal generation circuit |
| 41 | sample-and-hold element |
| 42 | amplifier |
| 43 | resistor |
| 44 | capacitor |
| 45 | amplifier |
| 46 | sample-and-hold element |
| 23, 24 | amplifier |

**Claims**

1. A buck converter for converting an input voltage (Vcc) to an output voltage (Vout) at an output, where the buck converter comprises the following features:

   - at least one inductive storage element (L) having a first connection being connected to the output terminal (OUT) and a second connection being connected during activation periods (Ton) to a supply potential (Vcc) and during deactivation periods to a reference potential (GND) depending on a drive signal (S1),

   - a drive circuit (10) for providing the drive signal (S1) to which a control signal (Sea) that varies with the output voltage (Vout) and a load current signal (S26) dependent on a load current through the inductive storage element are fed,

   - a signal generation circuit (20, 26, 40; 20, 26; 50) for producing a load current signal,

   wherein the signal generation circuit comprises the following features:

   - a ramp signal generation circuit (20), which generates a ramp signal (Sr) with a slope that varies with the input voltage (Vcc) and output voltage (Vout),

   - a DC signal generation circuit (40; 50) connected to the inductive storage element (L) that generates a DC signal (S0) that varies with the direct component (I0) of the load current (IL),

   - a logic circuit (26), to which the ramp signal (Sr) and the DC signal (S0) are fed, for producing the load current signal (S26).

**2.** A buck converter as claimed in Claim 1, wherein the ramp signal generation circuit (20) comprises the following features:

- a voltage-controlled current source (24) that produces a current that varies according to the difference between the input voltage (Vcc) and output voltage (Vout),

- a capacitive storage element (28), connected to the current source (24), at which the ramp signal (Sr) is provided.

**3.** A buck converter as claimed in Claim 1 or 2, wherein the DC signal generation circuit (40) has a sample-and-hold element (41) connected to the second connection of the inductive storage element (L) to sample the potential applied to the second connection of the inductive storage element (L) in synchronization with the drive signal.

**4.** A buck converter as claimed in Claim 3, wherein the sample-and-hold element (41) samples the potential at the beginning or directly before the beginning of an activation period (Ton).

**5.** A buck converter as claimed in Claim 3 or 4, wherein a freerunning element (T2) is connected between the second connection of the inductive storage element (L) and the reference potential (GND), where the sample-and-hold element (41) samples the voltage (V2) at the freerunning element (T2).

**6.** A buck converter as claimed in Claim 1 or 2, wherein the DC signal generation circuit (40) has a low-pass filter (50), which is connected in parallel to the inductive storage element (L), and which provides the DC signal (S0).

**7.** A buck converter as claimed in Claim 6, wherein the output of the low-pass filter (50) is connected to a sample-and-hold element (46) that provides the DC signal (S0).

**8.** A buck converter as claimed in Claim 7, wherein the sample-and-hold element samples an output signal of the low-pass filter (50) in synchronization with the drive signal (S1).

FIG 1

EP 1 587 208 A1

# FIG 2

EP 1 587 208 A1

# FIG 3

EP 1 587 208 A1

FIG 4

a) IL, I0

b) Sample

c) CLK S15

d) S0

e) Sr

f) Sea, S26

g) S13

h) S12 S1

Ton, T

**European Patent Office**

## EUROPEAN SEARCH REPORT

Application Number

EP 04 00 8878

### DOCUMENTS CONSIDERED TO BE RELEVANT

| Category | Citation of document with indication, where appropriate, of relevant passages | Relevant to claim | CLASSIFICATION OF THE APPLICATION (Int.Cl.7) |
|---|---|---|---|
| D,Y | US 6 166 528 A (SANDERS SETH ET AL) 26 December 2000 (2000-12-26) * abstract; figure 1 * ----- | 1-8 | H02M3/156 |
| Y | US 2001/046145 A1 (BROWN J STEVEN ET AL) 29 November 2001 (2001-11-29) * claims 1-3; figure 1 * ----- | 1-8 | |
| A | US 2002/136030 A1 (TOKUNAGA NORIKAZU ET AL) 26 September 2002 (2002-09-26) * paragraphs [0050], [0051]; figure 7 * ----- | 1 | |
| A | US 6 424 129 B1 (LETHELLIER PATRICE R) 23 July 2002 (2002-07-23) * column 5, line 37 - line 50; figure 1 * ----- | 6-8 | |

TECHNICAL FIELDS SEARCHED (Int.Cl.7)

H02M

The present search report has been drawn up for all claims

| Place of search | Date of completion of the search | Examiner |
|---|---|---|
| The Hague | 21 October 2004 | Imbernon, L |

EPO FORM 1503 03.82 (P04C01)

**ANNEX TO THE EUROPEAN SEARCH REPORT
ON EUROPEAN PATENT APPLICATION NO.**                    EP 04 00 8878

This annex lists the patent family members relating to the patent documents cited in  the above-mentioned European search report.
The members are as contained in the European Patent Office EDP file on
The European Patent Office is in no way  liable for these particulars which are merely  given for the purpose of information.

21-10-2004

| Patent document cited in search report | | Publication date | Patent family member(s) | | Publication date |
|---|---|---|---|---|---|
| US 6166528 | A | 26-12-2000 | DE | 10047230 A1 | 23-05-2001 |
| | | | JP | 2001136737 A | 18-05-2001 |
| | | | TW | 519585 B | 01-02-2003 |
| US 2001046145 | A1 | 29-11-2001 | TW | 512578 B | 01-12-2002 |
| | | | AU | 4750101 A | 03-10-2001 |
| | | | EP | 1290522 A1 | 12-03-2003 |
| | | | JP | 2003528553 T | 24-09-2003 |
| | | | WO | 0171446 A1 | 27-09-2001 |
| US 2002136030 | A1 | 26-09-2002 | JP | 2002354787 A | 06-12-2002 |
| US 6424129 | B1 | 23-07-2002 | NONE | | |

EPO FORM P0459